(19) **Europäisches Patentamt**
**European Patent Office**
**Office européen des brevets**

(11) **EP 4 270 052 B1**

(12) **EUROPEAN PATENT SPECIFICATION**

(45) Date of publication and mention
of the grant of the patent:
**29.10.2025 Bulletin 2025/44**

(21) Application number: **23170196.2**

(22) Date of filing: **26.04.2023**

(51) International Patent Classification (IPC):
*G01S 7/481* (2006.01)   *G01D 11/24* (2006.01)
*G01S 17/08* (2006.01)   *G01S 17/931* (2020.01)
*H05K 7/20* (2006.01)   *G02B 26/10* (2006.01)

(52) Cooperative Patent Classification (CPC):
**G01S 17/08; G01S 7/4812; G01S 7/4813;
G01S 7/4817; G01S 17/931; G02B 26/101;
G02B 26/105**

(54) **OPTO-MECHANICAL SCANNING SYSTEM WITH IMPROVED HEAT DISSIPATION**

OPTO-MECHANISCHES SCANNING-SYSTEM MIT VERBESSERTER WÄRMEABLEITUNG

SYSTÈME DE SCANNAGE OPTO-MÉCANIQUE AVEC DISSIPATION THERMIQUE AMÉLIORÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.04.2022 CN 202210468849**

(43) Date of publication of application:
**01.11.2023 Bulletin 2023/44**

(60) Divisional application:
**25203494.7**

(73) Proprietor: **Suteng Innovation Technology Co.,
Ltd
Shenzhen City Guangdong 518000 (CN)**

(72) Inventor: **CHEN, Huazhou
Shenzhen City (CN)**

(74) Representative: **Ran, Handong et al
Maucher Jenkins
Seventh Floor Offices
Artillery House
11-19 Artillery Row
London SW1P 1RT (GB)**

(56) References cited:
**CN-A- 110 231 606        CN-A- 114 063 096
US-A1- 2020 182 975**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of light technologies, and in particular, to an opto-mechanical system.

### BACKGROUND

An opto-mechanical system refers to a device that emits an emission light signal to a target in external space and then receives an echo light signal from the target to obtain information such as a distance between the opto-mechanical system and the target after an analysis and a comparison of the emission light signal and the echo light signal. The opto-mechanical system is widely applied by virtue of its data characteristics such as instantaneity, stability and sufficiency. However, in a related art, heat dissipation performance of the opto-mechanical system is poor, and a pass rate of products in a heat dissipation performance test is low. CN110231606A discloses a laser scanning device and a laser radar device comprising such a laser scanning device. The laser scanning device comprises a rotary prism, an emitting component and a receiving component, the emitting component is used for emitting a laser to a first surface of the rotary prism; the rotary prism rotates around a vertical central shaft thereof and performs field of view scanning, the laser is reflected to a target object via the first surface and generates an echo signal, the echo signal is returned according to an original angle and is reflected into the receiving component via a second surface of the rotary prism, and the laser received by the target object is not coaxial with the reflected echo signal; the receiving component is used for receiving the echo signal emitted via the second surface of the rotary prism. US2020182975A1 discloses a Light Detection and Ranging (LiDAR) system comprising: a light source configured to emit a light beam; a first apparatus configured to adjust the light beam, comprising: a first rotatable mirror configured to receive and reflect the light beam; and a first actuator configured to rotate the first rotatable mirror; and a second apparatus configured to adjust the light beam and receive the light beam from the first rotatable mirror. CN114 063096A discloses a laser transceiving scanning device and a laser radar system, which comprises a transceiving optical fiber, wherein the transceiving optical fiber is fixed by a fixing clamp and is connected with a light beam shaping and collimating system. A one-dimensional galvanometer and a one-dimensional rotating mirror are arranged at an outlet of the light beam shaping and collimating system; and the one-dimensional galvanometer is used for receiving a laser emitted by the light beam shaping and collimating system and reflecting the laser to the one-dimensional rotating mirror.

### SUMMARY

Embodiments of this application provide an opto-mechanical system, to resolve a problem of a low pass rate of products of an opto-mechanical system in a related art in a heat dissipation performance test. Technical solutions are as follows. The invention is set out in the appended set of claims.

According to a first aspect, an embodiment of this application provides an opto-mechanical system, according to independent claim 1.

In the opto-mechanical system in this embodiment of this application, the light emission assembly and the light receiving assembly are distributed on two opposite sides of the light scanning assembly roughly along the first linear direction. On the one hand, transmission paths of the emission light signal and the echo light signal can be extended, so that a light divergence angle is reduced and ranging performance of the opto-mechanical system is improved. On the other hand, the light emission assembly and the light receiving assembly can be separated in space, thereby facilitating heat dissipation of the light emission assembly and the light receiving assembly. In the opto-mechanical system in this embodiment of this application, the light emission assembly and the light receiving assembly are separated in space, which can improve a pass rate of the opto-mechanical system in the 85°C test as per the vehicle standard while implementing long ranging and high resolution, thereby improving product yield.

### BRIEF DESCRIPTION OF THE DIAGRAMS

To explain embodiments of the present application more clearly, the following briefly introduces the drawings that need to be used in the embodiments or the prior art. Obviously, the drawings in the following description are only some embodiments of the present application.

FIG. 1 is a schematic structural diagram of an opto-mechanical system according to a first embodiment of this application;

FIG. 2 is a schematic structural diagram of an opto-mechanical system according to a second embodiment of this application;

FIG. 3 is a schematic structural diagram of an opto-mechanical system according to a third embodiment of this application;

FIG. 4 is a schematic structural diagram of an opto-mechanical system according to a fourth embodiment of this application;

FIG. 5 is a schematic structural diagram of an opto-mechanical system according to a fifth embodiment of this application;

FIG. 6 is a schematic structural diagram of an opto-mechanical system according to a sixth embodiment of this application;

FIG. 7 is a schematic structural diagram of an opto-mechanical system according to a seventh embodiment of this application;

FIG. 8 is a schematic three-dimensional cross-sectional view of a partial structure of an opto-mechanical system according to an eighth embodiment of this application;

FIG. 9 is a schematic three-dimensional structural diagram of the opto-mechanical system shown in FIG. 8;

FIG. 10 is an exploded schematic view of a light receiving assembly in the opto-mechanical system according to the eighth embodiment of this application;

FIG. 11 is an enlarged schematic view of a structure at a position A in FIG. 8; and

FIG. 12 is a schematic three-dimensional view of an extinction fin in the opto-mechanical system shown in FIG. 8.

Reference signs: 1 - opto-mechanical system; 10 - light emission assembly; 20 - light receiving assembly; 21 - light receiver; 22 - receiving board; 221 - third board surface; 222 - fourth board surface; 23 - receiving shielding cover; 231 - first through hole; 232 - first shielding sub-cover; 233 - second shielding sub-cover; 24 - shielding ring; 25 - light filter; 261 - first stray light channel; 262 - second stray light channel; 30 - light scanning assembly; 31 - first light scanning element; 311 - galvanometer; 3111 - first reflection surface; 32 - second light scanning element; 321 - rotating mirror; 3211 - second reflection surface; 40 - first light path changing assembly; 41 - first reflection element; 411 - one first reflector; 412 - another first reflection element; 50 - second light path changing assembly; 51 - second reflection element; 511 - one second reflection element; 512 - another second reflection element; 60 - light collimating assembly; 61 - fast-axis collimating lens; 62 - slow-axis collimating lens; 70 - separating member; 71 - emission light channel; 711 - first light inlet; 712 - first light outlet; 72 - echo light channel; 721 - second light inlet; 722 - second light outlet; 73 - surrounding plate; 732 - first plate; 7324 - avoidance space; 75 - first cover plate; 76 - second cover plate; 80 - housing; 81 - first accommodating cavity; 82 - first board; 821 - inner board surface; 83 - box; 84 - cover; 85 - baffle; 91 - mainboard; 911 - fifth board surface; 912 - sixth board surface; 92 - electronic control board; 942 - second heat conduction member; 9421 - first heat conduction sub-member; 9422 - second heat conduction sub-member; 9423 - third heat conduction sub-member; 943 - light blocking plate; 944 - extinction fin; 9441 - extinction tube; 9442 - support plate; m - first linear direction; n - second linear direction; p - first rotation axis; and q - second rotation axis.

## DESCRIPTION OF THE INVENTION

To make objectives, technical solutions and advantages of the present application clearer, embodiments of the present application are described in further detail below with reference to the drawings.

.

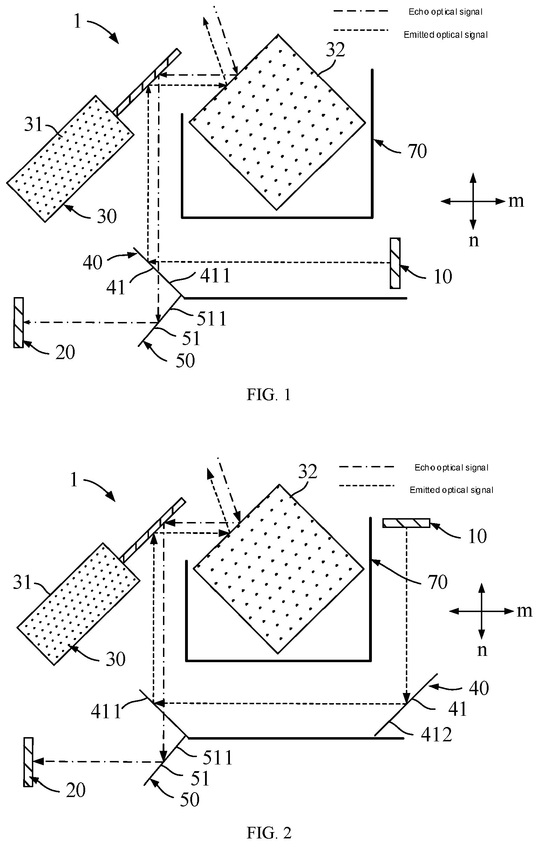

Referring to FIG. 1, an embodiment of this application provides an opto-mechanical system 1. The opto-mechanical system 1 is LiDAR or the like. The opto-mechanical system 1 is used for functions such as navigation, obstacle avoidance, obstacle recognition, ranging, speed measurement, and autonomous driving of products such as a vehicle, a robot, a transport vehicle, and a patrol vehicle.

Specifically, the opto-mechanical system 1 includes a light emission assembly 10 and a light receiving assembly 20, where the light emission assembly 10 is configured to emit an emission light signal to a target object, and the light receiving assembly 20 is configured to receive an echo light signal reflected by the target object. The echo light signal is compared with the emission light signal, and after appropriate processing, information such as a distance between the opto-mechanical system and the target object can be obtained.

In this embodiment of this application, the opto-mechanical system 1 further includes a light scanning assembly 30. The light scanning assembly 30 can be configured to emit, in multiple directions, emission light signals emitted by the light emission assembly 10. The light scanning assembly 30 can also be configured to transmit echo light signals in multiple directions to the light receiving assembly 20, to improve a detection angle of view of the opto-mechanical system 1 and measure distances between the target object and the opto-mechanical system 1 at different azimuths. Specifically, the light scanning assembly 30 may include a first light scanning element 31 and a second light scanning element 32, the emission light signals emitted by the light emission assembly 10 is sequentially transmitted by the first light scanning element 31 and the second light scanning element 32 to the target object, and the echo light signals reflected by the target object is sequentially transmitted by the second light scanning element 32 and the first light scanning element 31 to the light receiving assembly 20. The first light scanning element 31 and the second light scanning element 32 are used in combination, to emit the emission light signals in multiple directions and/or receive the echo light signals in multiple directions.

Along the first linear direction m, one of the light emission assembly 10 and the light receiving assembly 20 is on a side of the first light scanning element 31 that is away from the second light scanning element 32, and the other one of the light emission assembly 10 and the light receiving assembly 20 is on a side of the second light scanning element 32 that is away from the first light scanning element 31. The light emission assembly 10 and the light receiving assembly 20 are distributed on two opposite sides of the light scanning assembly 30 roughly along the first linear direction m. On the one hand, transmission paths of the emission light signal and the echo light signal can be extended, so that a light divergence angle is reduced and ranging performance of the opto-mechanical system 1 is improved. On the other hand, the light emission assembly 10 and the light receiving assembly 20 can be separated in space, thereby facilitating heat dissipation of the light emission assembly 10 and the light receiving assembly 20.

It should be noted that, for a long-ranging high-resolution opto-mechanical system 1, heat generation of the light emission assembly 10 and the light receiving assembly 20 is relatively severe, and the long-ranging high-resolution opto-mechanical system 1 usually fails an 85°C test as per a vehicle standard. However, in the opto-mechanical system 1 in this embodiment of this application, the light emission assembly 10 and the light receiving assembly 20 are separated in space, which can improve a pass rate of the opto-mechanical system 1 in the 85°C test as per the vehicle standard while implementing long ranging and high resolution, thereby improving product yield.

Herein, transmission paths of the emission light signal and the echo light signal are extended, which facilitates a decrease in the divergence angle and improvement of a ranging capability of the opto-mechanical system 1. Specifically, the opto-mechanical system 1 satisfies the following conditional formula 1:

$$SNR \propto P_t \sqrt{A_{rec}/A_{FOV}}$$ , where SNR is a signal-to-noise ratio of the echo light signal, Pt is total emission power, $A_{rec}$ is a receiving cross section, and $A_{FOV}$ is a receiving angle of view. It can be learned from the foregoing conditional formula 1 that a value of the receiving angle of view $A_{FOV}$ determines magnitude of noise in the echo light signal. The larger the receiving angle of view $A_{FOV}$, the greater the received noise. Therefore, it is necessary to reduce the receiving angle of view $A_{FOV}$. In addition, the receiving angle of view $A_{FOV}$ is related to a size of a light receiver 21 in the light receiving assembly 20 and focal length of a receiving lens. For example, if the divergence angle $\delta\theta$ is 0.2°x0.2°, the size of the light receiver 21 or the focal length of the receiving lens can be customized, so that the receiving angle of view $A_{FOV}$ is slightly greater than 0.2°x0.2°, thereby ensuring that all the echo light signals can be received by the light receiver 21 and avoiding loss of a light signal. In the following conditional formula 2 of the opto-mechanical system 1: $\delta\theta= L/f$, $\delta\theta$ is a divergence angle of the emission light signal, L is a light emission area of the light emission assembly 10, and f is focal length of an emission lens in the light emission assembly 10. It can be learned from the foregoing conditional formula 2 that a telephoto system can reduce the light divergence angle $\delta\theta$, and with the reduction in the light divergence angle $\delta\theta$, the receiving angle of view $A_{FOV}$ can be made smaller, noise is reduced, and the detection capability of the opto-mechanical system 1 is improved. In addition, the transmission paths of the emission light signal and the echo light signal are extended, and crosstalk between channels can be further reduced.

Herein, extension of the transmission paths of the emission light signal and the echo light signal facilitates a decrease in noise received by the light receiver 21 and improvement of a ranging capability of the opto-mechanical system 1. Specifically, due to processing tolerance or a cost, a photosensitive surface of the light receiver 21 is usually about 0.5 mm. For a system with a small divergence angle, a design of short focal length makes a receiving angle of view corresponding to the 0.5 mm photosensitive surface relatively greatly redundant, which increases received noise. However, the focal length of the opto-mechanical system 1 in this application can be 50 mm, to reduce the receiving angle of view.

It should be noted that, when along the first linear direction m, one of the light emission assembly 10 and the light receiving assembly 20 is on a side of the first light scanning element 31 that is away from the second light scanning element 32, and the other one of the light emission assembly 10 and the light receiving assembly 20 is on a side of the second light scanning element 32 that is away from the first light scanning element 31. This may mean that along the first linear direction m, the light emission assembly 10 is on the side of the first light scanning element 31 that is away from the second light scanning element 32 and the light receiving assembly 20 is on the side of the second light scanning element 32 that is away from the first light scanning element 31, or may mean that along the first linear direction m, the light receiving assembly 20 is on the side of the first light scanning element 31 that is away from the second light scanning element 32 and the light emission assembly 10 is on the side of the second light scanning element 32 that is away from the first light scanning element 31. An embodiment that along the first linear direction m, the light receiving assembly 20 is on the side of the first light scanning element 31 that is away from the second light scanning element 32 and the light emission assembly 10 is on the side of the second light scanning element 32 that is away from the first light scanning element 31.

It should be noted that, in a case that along the first linear direction m, the light emission assembly 10 is on the side of the second light scanning element 32 that is away from the first light scanning element 31, this may mean that the light emission assembly 10, the first light scanning element 31 and the second light scanning element 32 may be roughly in the same line and the light emission assembly 10 is on the side of the second light scanning element 32 that is away from the first light scanning element 31, or may alternatively mean that projection of the light emission assembly 10, the first light scanning element 31 and the second light scanning element 32 on the same line satisfies that the light emission assembly 10 is on the side of the second light scanning element 32 that is away from the first light scanning element 31, to reduce an assembly accuracy requirement of the light emission assembly 10, the first light scanning element 31 and the second light scanning element 32 and reduce assembly difficulty.

In the case that along the first linear direction m, the light emission assembly 10 is on the side of the second light scanning element 32 that is away from the first light scanning element 31, the emission light signal emitted by the light emission assembly 10 may be interfered with by the second light scanning element 32 when reaching a side of the first light scanning element 31 that is close to the second light scanning element 32. In this regard, the opto-mechanical system 1 in this embodiment of this application may also include a first light path changing assembly 40, and along the transmission path of the emission light signal, the first light path changing assembly 40 is disposed between the light emission assembly 10 and the first light scanning element 31. With the first light path changing assembly 40 disposed, the transmission path of the emission light signal emitted by the light emission assembly 10 changes from a transmission path of the first light scanning element 31 and the second light scanning element 32 in sequence to a transmission path of the first light path changing assembly 40, the first light scanning element 31 and the second light scanning element 32 in sequence, which can avoid interference from the second light scanning element 32 when the emission light signal is transmitted from the light emission assembly 10 to the first light path changing assembly 40 and when the emission light signal is transmitted from the first light path changing assembly 40 to the first light scanning element 31, thereby ensuring normal transmission of the emission light signal.

The first light path changing assembly 40 includes at least one first reflection element 41. The transmission path of the emission light signal can be deflected by the reflection surface of the first reflection element 41, to ensure that the emission light signal can be smoothly transmitted to the side of the first light scanning element 31 that is close to the second light scanning element 32.

For a case that the light emission assembly 10 may be on a side of the light scanning assembly 30 that is away from the target object along a second linear direction n, refer to FIG. 1. For a case that the light emission assembly 10 may alternatively be on a side of the light scanning assembly 30 that is close to the target object, refer to FIG. 2. The second linear direction n intersects with the first linear direction m. Referring to FIG. 1, when the light emission assembly 10 is on a side of the light scanning assembly 30 that is away from the target object along the second linear direction n, in all first reflection elements 41 of the first light path changing assembly 40, one first reflection element 411 may be distributed along the second linear direction n together with the first light scanning element 31 and may be on a side of the first light scanning element 31 that is away from the target object. In this embodiment of this application, one first reflection element 411 is numbered with 411, to distinguish the number from a number 41 of another first reflection element 41 when the first light path changing assembly 40 includes multiple first reflection elements 41. In an embodiment, at this time, the first light path changing assembly 40 includes only one first reflection element 41.

Referring to FIG. 2, when the light emission assembly 10 is on a side of the light scanning assembly 30 that is close to the target object along the second linear direction n, in all the first reflection elements 41, one first reflection element 411 is distributed along the second linear direction n together with the first light scanning element 31 and on a side of the first light scanning element 31 that is farther away from the target object, another first reflection element 412 is distributed along the second linear direction n together with the second light scanning element 32 and on a side of the second light scanning element 32 that is farther away from the target object, and along the transmission path of the emission light signal, the another first reflection element 412 is between the light emission assembly 10 and the first reflection element 411. In this embodiment of this application, one first reflection element 411 is numbered with 411, and another first reflection element 412 is numbered with 412 for distinction.

Herein, the reflection element 41 may also be replaced with a refraction element or the like.

It should be noted that, in the foregoing case that along the first linear direction m, the light receiving assembly 20 is on the side of the first light scanning element 31 that is away from the second light scanning element 32, this means that the light receiving assembly 20, the first light scanning element 31 and the second light scanning element 32 are roughly in the same line and the light receiving assembly 20 is on the side of the first light scanning element 31 that is away from the second light scanning element 32, or means that projection of the light receiving assembly 20, the first light scanning element 31 and the second light scanning element 32 on the same line satisfies that the light receiving assembly 20 is on the side of the first light scanning element 31 that is away from the second light scanning element 32, to reduce an assembly accuracy requirement of the light receiving assembly 20, the first light scanning element 31 and the second light scanning element 32 and reduce assembly difficulty.

In the case that along the first linear direction m, the light receiving assembly 20 is on the side of the first light scanning element 31 that is away from the second light scanning element 32, the echo light signal may be interfered with by the first light scanning element 31 when being transmitted from the side of the first light scanning element 31 that is close to the second light scanning element 32 to the light receiving assembly 20. In this regard, the opto-mechanical system 1 in this embodiment of this application includes a second light path changing assembly 50, and along the transmission path of the echo light signal, the second light path changing assembly 50 is disposed between the light receiving assembly 20 and the first light scanning element 31. With the second light path changing assembly 50 disposed, the transmission path of the echo light signal changes from a transmission path of passing through the first light scanning element 31 and then reaching the light receiving assembly 20 to a transmission path of passing through the first light scanning element 31 and the second light path changing assembly 50 and then reaching the light receiving assembly 20, which can avoid interference from the first light scanning element 31 when the echo light signal is transmitted from the first light scanning element 31 to the second light path changing assembly 50 and when the echo light signal is transmitted from the second light path changing assembly 50 to the light receiving assembly 20, thereby ensuring normal transmission of the echo light signal.

The second light path changing assembly 50 includes at least one second reflection element 51, and the transmission path of the echo light signal can be deflected by a reflection surface of the second reflection element 51, to ensure that the echo light signal can be smoothly transmitted to the light receiving assembly 20.

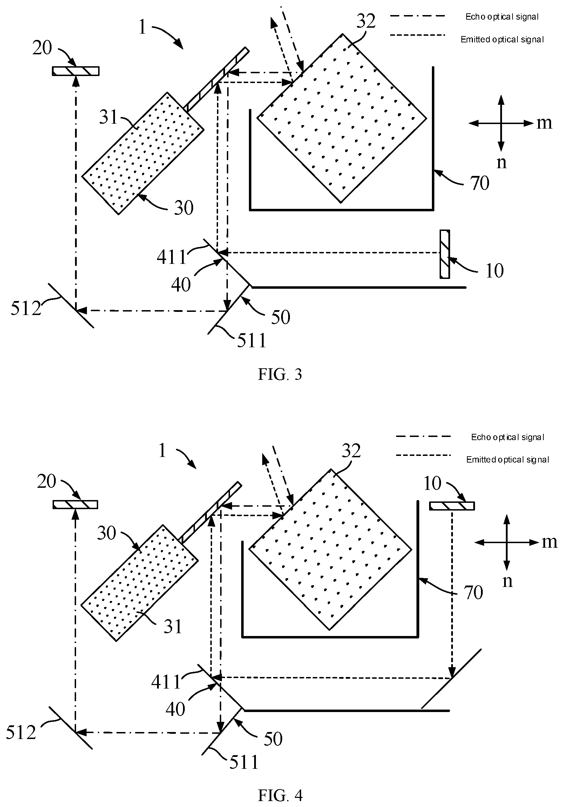

For a case that the light receiving assembly 20 may be on a side of the light scanning assembly 30 that is away from the target object along the second linear direction n, refer to FIG. 1 and FIG. 2. For a case that the light receiving assembly 20 is on a side of the light scanning assembly 30 that is close to the target object, refer to FIG. 3 and FIG. 4. With reference to FIG. 1 and FIG. 2, when the light receiving assembly 20 is on the side of the light scanning assembly 30 that is away from the target object along the second linear direction n, in all second reflection elements 51 of the second light path changing assembly 50, one second reflection element 511 is distributed along the second linear direction n together with the first light scanning element 31 and may be on a side of the first light scanning element 31 that is away from the target object. In this embodiment of this application, one second reflection element 511 is numbered with 511, to distinguish the number from a number 51 of another second reflection element 51 when the second light path changing assembly 50 includes multiple second reflection elements 51. In an embodiment, at this time, the second light path changing assembly 50 includes only one second reflection element 51.

Referring to FIG. 3 and FIG. 4, when the light receiving assembly 20 is on a side of the light scanning assembly 30 that is close to the target object along the second linear direction n, in all the second reflection elements 51, one second reflection element 511 is distributed along the second linear direction n together with the first light scanning element 31 and on a side of the first light scanning element 31 that is away from the target object, another second reflection element 512 is distributed along the second linear direction n together with the first light scanning element 31 and on a side of the first light scanning element 31 that is away from the target object. Along the first linear direction m, the second reflection element 511 is between the another second reflection element 512 and the second light scanning element 32, and along the transmission path of the echo light signal, the another second reflection element 512 is between the second reflection element 511 and the light receiving assembly 20. In this embodiment of this application, one second reflection element 511 is numbered with 511, and another second reflection element 512 is numbered with 512 for distinction.

When the first reflection element 411 is between the second reflection element 511 and the first light scanning element 31 along the second linear direction n, to prevent the first reflection element 411 from hindering transmission of the echo light signal from the first light scanning element 31 to one second reflection element 511, the first reflection element 411 may be provided with a first light-passing aperture (not shown in the figure), so that the echo light signal can pass through the first light-passing aperture and then reach the second reflection element 511.

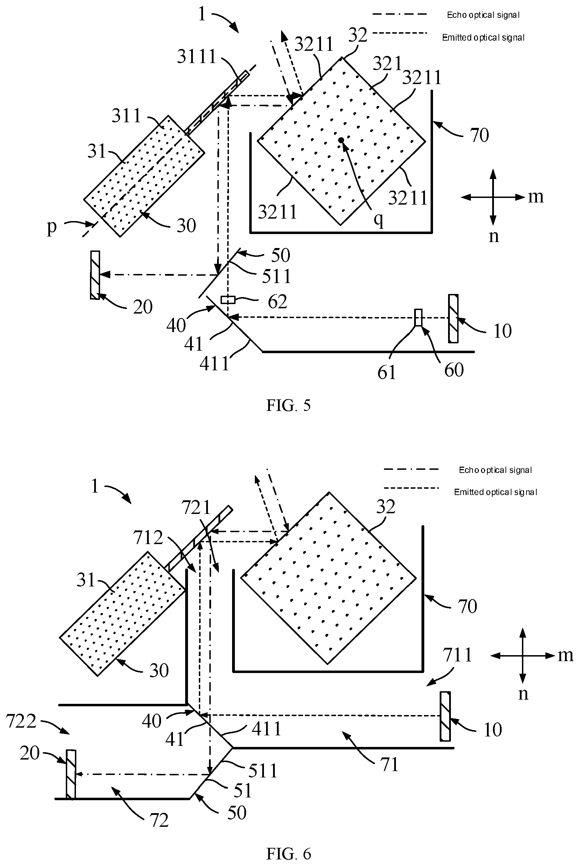

Referring to FIG. 5, when the second reflection element 511 is between the first reflection element 411 and the first light scanning element 31 along the second linear direction n, to prevent the second reflection element 511 from hindering arrival of the emission light signal at the first light scanning element 31, the second reflection element 511 is provided with a second light-passing aperture (not shown in the figure), so that the emission light signal can pass through the second light-passing aperture and then reach the first light scanning element 31.

An outgoing position of the emission light signal and an incident position of the echo light signal is roughly in the middle of the opto-mechanical system 1, to facilitate calibration of the opto-mechanical system 1 and symmetry of short-distance point cloud. It should be noted that, positions of the light emission assembly 10, the light receiving assembly 20, the first light scanning element 31 and the second light scanning element 32 are properly adjusted along the first linear direction m, so that the outgoing position of the emission light signal and the incident position of the echo light signal are roughly in the middle of the opto-mechanical system 1.

When the opto-mechanical system 1 in this embodiment of this application is applied to autonomous driving, a detection capability of 250m with resolution of 10%, and a resolution capability of less than 0.1° can be implemented, thereby meeting a requirement of high-precision imaging.

Both the first light scanning element 31 and the second light scanning element 32 have a reflection structure. The first light scanning element 31 is a galvanometer or a rotating mirror, and the second light scanning element 32 is a galvanometer or a rotating mirror. In this embodiment of this application, the first light scanning element 31 includes a galvanometer 311, and the second light scanning element 32 includes a rotating mirror 321. Specifically, the galvanometer 311 has a first reflection surface 3111 for transmitting an emission light signal and/or an echo light signal, the galvanometer 311 rotates around a first rotation axis p, and the first reflection surface 3111 faces the second light scanning element 32. The rotating mirror 321 has multiple second reflection surfaces 3211 for transmitting the emission light signal and/or the echo light signal, the rotating mirror 321 rotates around a second rotation axis q, and the multiple second reflection surfaces 3211 are arranged around a periphery of the second rotation axis q, so that at least one second reflection surface 3211 faces the first reflection surface 3111 of the first light scanning element 31 when the rotating mirror 321 rotates around the second rotation axis q.

Herein, the reflection surface (for example, the first reflection surface 3111 and the second reflection surface 3211) reflect the light signal (for example, the emission light signal and the echo light signal), and change the transmission direction of the light signal, so that the light signal can be smoothly transmitted backward.

The first rotation axis p may be perpendicular to the second rotation axis q. Herein, rotation of the galvanometer 311 around the first rotation axis p implement adjustment of an angle of view in a direction, and rotation of the rotating mirror 321 around the second rotation axis q can implement adjustment of an angle of view in another direction. In addition, when the first rotation axis p is perpendicular to the second rotation axis q, adjustment directions of the two angles of view may be perpendicular to each other. The rotation of the galvanometer 311 around the first rotation axis p implements adjustment in a vertical angle of view, and the rotation of the rotating mirror 321 around the second rotation axis q implements adjustment in a horizontal angle of view. In this embodiment of this application, the rotating mirror 321 implements scanning at a horizontal angle of view of 120°, and the galvanometer 311 implements scanning at a vertical angle of view of 25°, to complete scanning of space at a full angle of view of 120°x25°.

The opto-mechanical system 1 further includes a light collimating assembly 60, and the light collimating assembly 60 is between the light emission assembly 10 and the first light scanning element 31 along the transmission path of the emission light signal. With the light collimating assembly 60 disposed, the emission light signal emitted by the opto-mechanical system 1 maintains relatively high power density when incident on a far target object. The light collimating assembly 60 includes a fast-axis collimating lens 61 and a slow-axis collimating lens 62, the fast-axis collimating lens 61 is between a first reflection element 41 and the light emission assembly 10, and the slow-axis collimating lens 62 is between the first reflection element 41 and the first light scanning element 31. The fast-axis collimating lens 61 and the slow-axis collimating lens 62 collimate fast and slow axes, enhance a collimation effect, and increase output luminance of the emission light signal.

Referring to FIG. 6, the opto-mechanical system 1 further includes a separating member 70, and the separating member 70 forms an emission light channel 71 and an echo light channel 72. The emission light channel 71 is configured to transmit the emission light signal, thereby reducing or even avoiding interference of stray light on the emission light signal. The echo light channel 72 is configured to transmit the echo light signal, thereby reducing or even avoiding interference of stray light on the echo light signal.

Specifically, the emission light channel 71 has a first light inlet 711 and a first light outlet 712, the light emission assembly 10 is disposed to correspond to the first light inlet 711, and the first light scanning element 31 is disposed to correspond to the first light outlet 712, so that the emission light signal emitted by the light emission assembly 10 can enter the emission light channel 71 in a timely manner and reach the first light scanning element 31 after being transmitted in the emission light channel 71, thereby reducing or even avoiding interference of the stray light.

The echo light channel 72 has a second light inlet 721 and a second light outlet 722, the first light scanning element 31 is also disposed to correspond to the second light inlet 721, and the light receiving assembly 20 is disposed to correspond to the second light outlet 722, so that the echo light signal transmitted by the first light scanning element 31 can enter the echo light channel 72 in a timely manner and reach the light receiving assembly 20 after being transmitted in the echo light channel 72, thereby reducing or even avoiding interference of the stray light.

At least part of the emission light channel 71 and at least part of the echo light channel 72 are separated to improve independence of the emission light channel 71 and the echo light channel 72 and reduce crosstalk between the emission light signal and the echo light signal. It should be noted that the emission light channel 71 is partly separated from the echo light channel 72, or the emission light channel 71 is totally separated from the echo light channel 72.

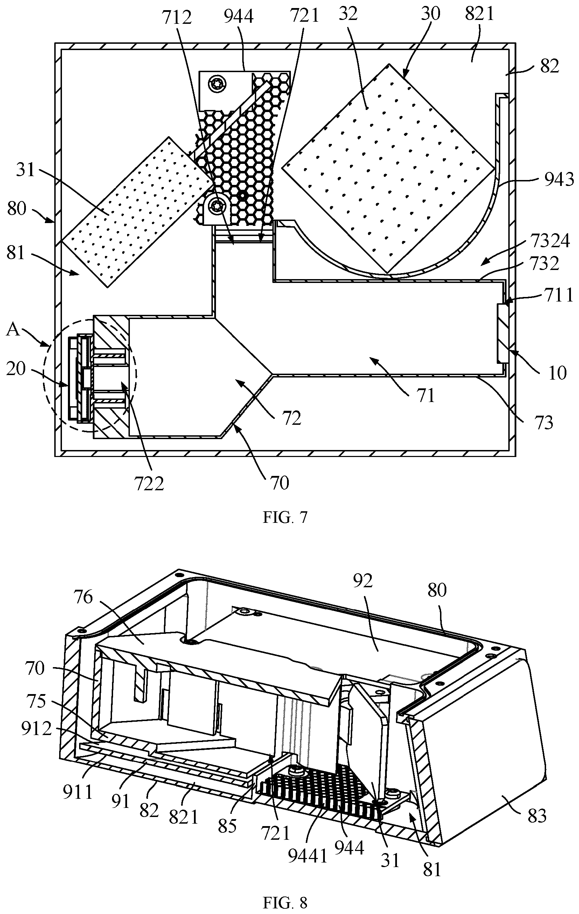

Referring to FIG. 7, both the light emission assembly 10 and the light receiving assembly 20 are connected and fixed to the separating member 70.

The opto-mechanical system 1 further includes a housing 80, the housing 80 forms a first accommodating cavity 81, and the separating member 70, the light emission assembly 10, the light receiving assembly 20, a light scanning assembly 30 and the like are provided in the first accommodating cavity 81 of the housing 80.

The separating member 70 includes a surrounding plate 73, the surrounding plate 73 forms an emission light channel 71 and an echo light channel 72, the surrounding plate 73 may include a first plate 732, a first light outlet 712 and a second light inlet 721 are formed on the first plate 732, the first plate 732 is recessed inward the surrounding plate 73 to form avoidance space 7324, and the second light scanning element 32 is disposed in the avoidance space 7324, so that a structure of the opto-mechanical system 1 is more compact and a miniaturized design of the opto-mechanical system 1 is implemented.

Referring to FIG. 8, the separating member 70 further includes a first cover plate 75 and a second cover plate 76, the first cover plate 75 and the second cover plate 76 are respectively on two opposite sides of the surrounding plate 73 and connected to the surrounding plate 73, to form the emission light channel 71 and the echo light channel 72 together with the surrounding plate 73, so that light-shielding performance of the emission light channel 71 and the echo light channel 72 is better and the interference of the stray light on the emission light signal and the echo light signal is reduced. A connection between the first cover plate 75, the second cover plate 76 and the surrounding plate 73 is a snap-fit connection or an adhesive connection. In this embodiment of this application, the first cover plate 75 and the surrounding plate 73 directly form an integrated structure, and the snap-fit connection of the second cover plate 76 and the surrounding plate 73 can be implemented through a structure such as a slot or a pin.

The opto-mechanical system 1 further includes a mainboard 91, the mainboard 91 is disposed in the first accommodating cavity 81 of the housing 80, the mainboard 91 is electrically connected to the light emission assembly 10 and configured to control the light emission assembly 10 to emit an emission light signal to the target object, and the mainboard 91 is also electrically connected to the light receiving assembly 20 and configured to control the light receiving assembly 20 to receive the echo light signal reflected by the target object.

The opto-mechanical system 1 further includes an electronic control board 92, the electronic control board 92 is disposed in the first accommodating cavity 81 of the housing 80, the electronic control board 92 is disposed independently of the mainboard 91 and electrically connected to the mainboard 91, the electronic control board 92 is also electrically connected to the first light scanning element 31 and configured to control a movement of the first light scanning element 31, and the electronic control board 92 is also electrically connected to the second light scanning element 32 and configured to control a movement of the second light scanning element 32. For example, when the first light scanning element 31 includes a galvanometer 311, the electronic control board 92 is electrically connected to the galvanometer 311 and configured to control the galvanometer 311 to rotate around the first rotation axis p. When the second light scanning element 32 includes the rotating mirror 321, the electronic control board 92 is electrically connected to the rotating mirror 321 and configured to control the rotating mirror 321 to rotate around the second rotation axis q.

In this embodiment of this application, the electronic control board 92 and the mainboard 91 are disposed independently of each other. Compared with integrated disposition, the heat dissipation performance of the opto-mechanical system 1 can be improved, and when the product needs iteration or is inconsistent with a requirement of a customer, only the electronic control board 92 needs to be disassembled and replaced, which can reduce a replacement cost and improve replacement efficiency.

The electronic control board 92 and the mainboard 91 are respectively arranged on two opposite sides of the light scanning assembly 30 to increase a distance between the electronic control board 92 and the mainboard 91 and improve the heat dissipation performance of the opto-mechanical system 1. The electronic control board 92 is disposed to correspond to the first light scanning element 31.

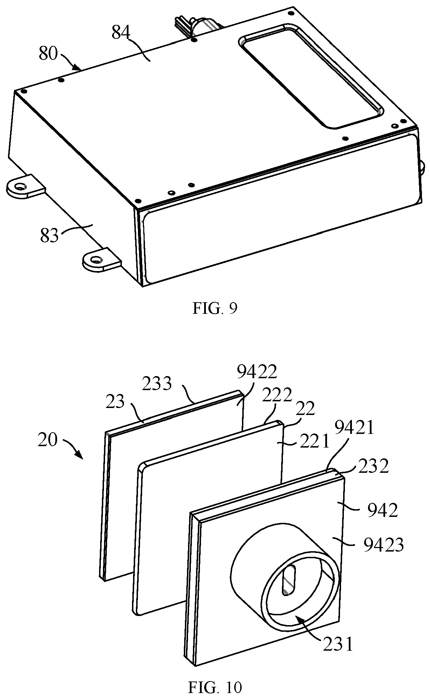

Referring to FIG. 8 and FIG. 9, the housing 80 includes a box 83 and a cover 84 connected to the box 83, the box 83 and the cover 84 jointly define a first accommodating cavity 81, the electronic control board 92 is disposed close to the cover 84, and the mainboard 91 is disposed close to a bottom of the box 83. Further, a visible window corresponding to the electronic control board 92 is disposed on the cover 84, so that staff can check an operation status of the electronic control board 92 and find a fault in a timely manner when the fault occurs.

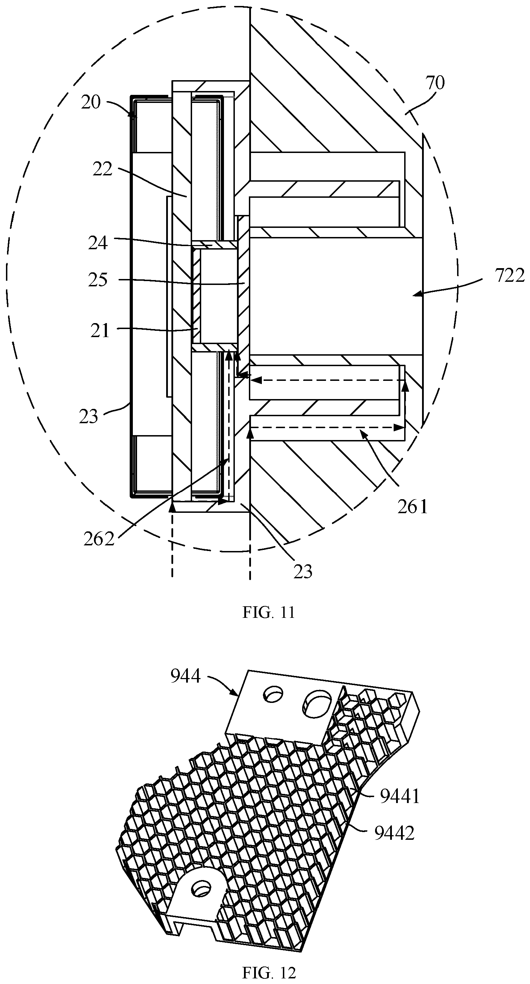

The light emission assembly 10 includes a light emitter and an emission board, the light emitter is mounted on the emission board and electrically connected to the emission board, and the emission board is disposed independently of the mainboard 91 and electrically connected to the mainboard 91. Referring to FIG. 10 and FIG. 11, the light receiving assembly 20 includes a light receiver 21 and a receiving board 22, the light receiver 21 is mounted on the receiving board 22 and electrically connected to the receiving board 22, and the receiving board 22 is disposed independently of the mainboard 91 and electrically connected to the mainboard 91. The emission board, the receiving board 22 and the mainboard 91 are disposed independently, which can further improve the heat dissipation performance of the opto-mechanical system 1 and facilitate an operation such as replacement of the emission board and the receiving board 22.

The opto-mechanical system 1 further includes an interface board, the interface board is disposed independently of the mainboard 91 and electrically connected to the mainboard 91. The interface board is configured to provide a power supply signal for at least one of the light emission assembly 10, the light receiving assembly 20, the first light scanning element 31 or the second light scanning element 32. Because this may be inconsistent with an interface requirement of a user, the interface board is disposed independently of the mainboard 91, which can facilitate replacement or repair of the interface board and further improve the heat dissipation performance of the opto-mechanical system 1.

In an embodiment, the mainboard 91, the electronic control board 92, the emission board, the receiving board 22 and the interface board are disposed independently of each other, so that only a part of the boards needs to be updated and redesigned when the product needs iteration or is inconsistent with a requirement of the user, thereby saving a cost and time and implementing a better heat dissipation effect.

The emission plate includes a substrate and a conductive layer disposed on the substrate, and the substrate is a plate with better heat dissipation performance. In an embodiment, the substrate is a ceramic plate.

A first heat conduction member is disposed between the emission board and the housing 80. The emission board has a first board surface and a second board surface facing away from the first board surface, the first board surface is mounted with the light emitter, and the first heat conduction member is disposed between the second board surface and the separating member 70, so that heat generated by the emission board is transferred to the separating member 70 through the first heat conduction member, then transferred to the housing 80 through the separating member 70, and then dissipated outside. Herein, the first heat conduction member includes a graphene layer and a heat conduction gel layer.

A second heat conduction member 942 is disposed between the receiving board 22 and the housing 80. The light receiving assembly 20 also includes a receiving shielding cover 23 covering the light receiver 21 and the receiving board 22, the receiving shielding cover 23 is provided with a first through hole 231 corresponding to the light receiver 21, the receiving board 22 has a third board surface 221 and a fourth board surface 222 facing away from the third board surface 221, and the third board surface 221 is mounted with the light receiver 21. A first heat conduction sub-member 9421 is disposed between the third board surface 221 and the receiving shielding cover 23, a second heat conduction sub-member 9422 is disposed between the fourth board surface 222 and the receiving shielding cover 23, a third heat conduction sub-member 9423 is disposed between the receiving shielding cover 23 and the separating member 70, and the second heat conduction member 942 includes the first heat conduction sub-member 9421, the second heat conduction sub-member 9422 and the third heat conduction sub-member 9423, so that heat generated by the receiving board 22 is transferred to the separating member 70 through the second heat conduction member 942, then transferred to the housing 80 through the separating member 70, and then dissipated outside. Herein, both the first heat conduction sub-member 9421 and the second heat conduction sub-member 9422 include a heat conduction gel layer, and the third heat conduction sub-member 9423 includes a graphene layer and a heat conduction gel layer.

The receiving shielding cover 23 includes a first shielding sub-cover 232 on a side on which the third board surface 221 is located and a second shielding sub-cover 233 on a side on which the fourth board surface 222 is located, and both the first shielding sub-cover 232 and the second shielding sub-cover 233 are connected to the receiving board 22.

A third heat conduction member is disposed between the mainboard 91 and the housing 80, so that heat generated by the mainboard 91 is dissipated to the outside of the housing 80 directly through the third heat conduction member. A fourth heat conduction member is disposed between the electronic control board 92 and the housing 80, so that heat generated by the electronic control board 92 is dissipated to the outside of the housing 80 directly through the fourth heat conduction member. A fifth heat conduction member is disposed between an interface board and the housing 80, so that heat generated by the interface board can be dissipated to the outside of the housing 80 directly through the fifth heat conduction member. A sixth heat conduction member is disposed between the separating member 70 and the housing 80, so that heat generated by the emission board and heat generated by the receiving board 22 can be dissipated to the outside of the housing 80 directly through the sixth heat conduction member on the separating member 70.

Each of the third heat conduction member, the fourth heat conduction member, the fifth heat conduction member and the sixth heat conduction member includes a heat conduction gel layer.

Referring to FIG. 8 again, the housing 80 includes a first board 82, the first board 82 has an inner board surface 821 forming the first accommodating cavity 81, the inner board surface 821 includes a first region, and the mainboard 91 is disposed to correspond to the first region. The separating member 70 is located in the first accommodating cavity 81 and is disposed on the side of the mainboard 91 that is farther away from the inner board surface 821, the separating member 70 covers at least part of the mainboard 91, and the separating member 70 and the first board 82 are both metal parts. Both the separating member 70 and the first board 82 are designed to be formed by a metal member, and can form an electromagnetic shielding structure of the mainboard 91, to implement shielding from impact of electromagnetic radiation outside the separating member 70 and the first board 82 on the mainboard 91 and to prevent the mainboard 91 from affecting outside of the separating member 70 and the first board 82 during operation. Compared with an electromagnetic shielding structure of an entire device in which the entire housing 80 is directly formed by a metal member in a related art, electromagnetic interference between the mainboard 91 and internal assemblies such as the light emission assembly 10 and the light receiving assembly 20 in the housing 80 can be avoided.

It should be noted that, not only the first board 82 is formed by a metal member, but also the entire housing 80 can also be formed by a metal member, to ensure the electromagnetic shielding performance of the entire device.

The first cover plate 75 is disposed between the second cover plate 76 and the first board 82, and for the foregoing description that "the separating member 70 is formed by a metal member", this means that only the first cover plate 75 is formed by a metal member, or the entire separating member 70 is formed by a metal member. When only the first cover plate 75 is the metal member, the separating member 70 is formed by combining the metal member and a non-metal member, to reduce overall weight and a manufacturing cost of the separating member 70. The separating member 70 is formed by the metal member and the non-metal member via a dual-color injection molding process, or formed by the metal member and the non-metal member via mechanical assembly.

The mainboard 91 includes a fifth board surface 911 facing the first board 82 and a sixth board surface 912 facing away from the fifth board surface 911, the first board 82 covers the entire fifth board surface 911, and the separating member 70 partly or completely covers the sixth board surface 912. When the separating member 70 partly covers the sixth board surface 912, the separating member 70 can cover a region of the sixth board surface 912 in which an electronic element is located, and a region of the sixth board surface 912 in which an electrical interface is located is exposed, which can not only improve the electromagnetic shielding performance of the electronic element, but also satisfy a normal electrical connection between the mainboard 91 and another assembly.

The light emission assembly 10 further includes an emission shielding cover, the emission shielding cover covers the light emitter, and the emission shielding cover is provided with a second through hole for an emission light signal emitted by the light emitter to pass through. The emission shielding cover is disposed, so that an electromagnetic signal generated by the light emission assembly 10 and an electromagnetic signal generated by the mainboard 91 is less apt to crosstalk. Similarly, when the light receiving assembly 20 includes a receiving shield 23, the receiving shield 23 can ensure that the electromagnetic signal generated by the light receiving assembly 20 and the electromagnetic signal generated by the mainboard 91 are less apt to crosstalk.

The inner board surface 821 further includes a second region connected to a first region, and the light emission assembly 10 is disposed to correspond to the second region; and/or the inner board surface 821 further includes a third region connected to the first region, and the light receiving assembly 20 is disposed to correspond to the third region. The light emission assembly 10, the light receiving assembly 20, the mainboard 91 and the separating member 70 covering the mainboard 91 are distributed at different positions on the inner board surface 821, to facilitate assembly and make overall layout reasonable, thereby improving space utilization of the opto-mechanical system 1.

The inner board surface 821 further includes a fourth region connected to the first region, and the light scanning assembly 30 is disposed to correspond to the fourth region, so that the light scanning assembly 30 and the separating member 70 covering the mainboard 91 are distributed at different positions on the inner board surface 821, to facilitate assembly.

Referring to FIG. 7 again, the opto-mechanical system 1 further includes a light blocking plate 943, the light blocking plate 943 is located in the first accommodating cavity 81 and is disposed on the side of the second light scanning element 32 that is close to the separating member 70, an end of the light blocking plate 943 is between the second light scanning element 32 and the first light scanning element 31, and another side extends toward a direction in which the second light scanning element 32 leaves the first light scanning element 31, and is connected to the housing 80. Combining the light blocking plate 943 and the separating member 70 can further improve anti-interference performance of the emission light signal and/or the echo light signal during transmission.

The opto-mechanical system 1 further includes an extinction fin 944, where the extinction fin 944 is located in the first accommodating cavity 81 and disposed to correspond to the first light outlet 712 and the second light inlet 721. The extinction fin 944 reflects the stray light multiple times to reduce intensity of the stray light, thereby reducing the interference of the stray light to the light signal on the working band.

Referring to FIG. 8, the extinction fin 944 is on a side of the first cover plate 75 of the separating member 70 that is away from the second cover plate 76 or on a side of the second cover plate 76 that is away from the first cover plate 75, so that the stray light is not apt to enter the second light inlet 721 after being reflected by the extinction fin 944 multiple times, and is not apt to interfere with a light signal on working band.

The housing 80 includes a baffle 85, and the first cover plate 75 is between the inner board surface 821 and the second cover plate 76. The baffle 85 is between the extinction fin 944 and the separating member 70, has one end connected to the inner board surface 821 of the first board 82, and has another end extending toward the second cover plate 76, and a surface of the baffle 85 that faces away from the inner board surface 821 is on a side of the extinction fin 944 that is away from the inner board surface 821, to further use the baffle 85 to reduce interference of stray light to the light signal on the working band that is transmitted through the separating member 70. The surface of the baffle 85 that faces away from the inner board surface 821 is on the side of the first cover plate 75 that is away from the inner board surface 821.

The extinction fin 944 includes multiple extinction tubes 9441, an extinction aperture is disposed on the extinction tube 9441, and an extension direction of the extinction aperture is from the first cover plate 75 to the second cover plate 76, so that the stray light can be reflected multiple times in the extinction aperture. The multiple extinction tubes 9441 is roughly distributed into a honeycomb shape.

Referring to FIG. 12, the extinction fin 944 includes a support plate 9442, the support plate 9442 is attached to the inner board surface 821 of the first board 82 and the multiple extinction tubes 9441 are all connected to the support plate 9442, to facilitate assembly the extinction fin 944 and the housing 80.

Referring to FIG. 11, the light receiving assembly 20 further includes a shielding ring 24 disposed on the periphery of the light receiver 21 and a light filter 25 disposed on an incident side of the light receiver 21. When a product is assembled, if there is an assembly gap, because the stray light may reach the light receiver 21 through the gap, designing the shielding ring 24 can prevent stray light at the gap from being transmitted to the light receiver 21. Referring to FIG. 11, the light receiving assembly 20 includes a light filter 25 disposed on the incident side of the light receiver 21. The gap between the light filter 25, the separating member 70 and the receiving shielding cover 23 form a first stray light channel 261, and the gap between the receiving shielding cover 23 and the receiving board 22 form the second stray light channel 262. At this time, the shielding ring 24 is disposed on the periphery of the light receiver 21, with two ends respectively abutting a surface of the receiving board 22 that is mounted with the light receiver 21 and abutting a surface of the light filter that faces the light receiver 21 to block the first stray light channel 261 and the second stray light channel 262.

In the description of the present application, it shall be understood that the terms such as "first" and "second" are merely intended for a purpose of description, and shall not be understood as an indication or implication of relative importance. In addition, in the descriptions of this application, "a plurality of" means two or more unless otherwise specified. Herein, "and/or" is an association relationship for describing associated objects and indicates that three relationships may exist. For example, A and/or B may mean the following three cases: Only A exists, both A and B exist, and only B exists. The character "/" generally indicates an "or" relationship between the associated objects.

## Claims

1. An opto-mechanical system (1), comprising:

   a light emission assembly (10), configured to emit an emission light signal to a target object;
   a light receiving assembly (20), configured to receive an echo light signal reflected by the target object;
   **characterized in that** the system further comprises:

   a light scanning assembly (30), comprising a first light scanning element (31) and a second light scanning element (32), wherein the emission light signal emitted by the light emission assembly (10) is sequentially transmitted by the first light scanning element (31) and the second light scanning element (32) to the target object, and the echo light signal reflected by the target object is sequentially transmitted by the second light scanning element (32) and the first light scanning element (31) to the light receiving assembly (20),
   wherein:

   one of the light emission assembly (10) and the light receiving assembly (20) is on a side of the first light scanning element (31) that is away from the second light scanning element (32) along a first linear direction (m), and the other one of the light emission assembly (10) and the light receiving assembly (20) is on a side of the second light scanning element (32) that is away from the first light scanning element (31) along the first linear direction (m);
   the second light scanning element (32) comprises a rotating mirror (321), the rotating mirror (321) has multiple second reflection surfaces (3211) for transmitting the emission light signal and the echo light signal, the rotating mirror (321) is rotatable around a second rotation axis (q), and the multiple second reflection surfaces (3211) are disposed around a periphery of the second rotation axis; and
   an outgoing position of the emission light signal and an incident position of the echo light signal are in the middle of the opto-mechanical system (1).

2. The opto-mechanical system according to claim 1, wherein:

   the light emission assembly and the light scanning assembly are distributed along a second linear direction (n) and the light emission assembly is on a side of the light scanning assembly that is away from the target object, and the second linear direction (n) intersects with the first linear direction (m); or
   the light receiving assembly and the light scanning assembly are distributed along the second linear direction and the light receiving assembly is on a side of the light scanning assembly that is away from the target object, and the second linear direction intersects with the first linear direction.

3. The opto-mechanical system according to claim 1 or claim 2, wherein:

the opto-mechanical system further comprises a first light path changing assembly (40), wherein along a transmission path of the emission light signal, the first light path changing assembly is disposed between the light emission assembly and the first light scanning element, and the first light path changing assembly comprises at least one first reflection element; and
the opto-mechanical system further comprises a second light path changing assembly (50), wherein along a transmission path of the echo light signal, the second light path changing assembly is between the light receiving assembly and the first light scanning element, and the second light path changing assembly comprises at least one second reflection element.

4. The opto-mechanical system according to claim 3, wherein along the second linear direction, one first reflection element is between one second reflection element and the first light scanning element, the first reflection element is provided with a first light-passing aperture, the echo light signal can pass through the first light-passing aperture to reach the second reflection element, and the second linear direction intersects with the first linear direction.

5. The opto-mechanical system according to claim 3, wherein along the second linear direction, one second reflection element is between one first reflection element and the first light scanning element, the second reflection element is provided with a second light-passing aperture, the emission light signal can pass through the second light-passing aperture to reach the first light scanning element, and the second linear direction intersects with the first linear direction.

6. The opto-mechanical system according to claim 1, wherein
the first light scanning element comprises a galvanometer (311), the galvanometer has a first reflection surface for transmitting the emission light signal and/or the echo light signal, and the galvanometer is rotatable around a first rotation axis (p).

7. The opto-mechanical system according to any one of claims 1 to 6, further comprising a housing forming a first accommodating cavity, wherein the light emission assembly, the light receiving assembly and the light scanning assembly are all located in the first accommodating cavity, and a heat conduction member is provided between the housing and at least one of the light emission assembly, the light receiving assembly or the light scanning assembly.

8. The opto-mechanical system according to any one of claims 1 to 7, further comprising:

a mainboard, electrically connected to the light emission assembly and configured to control the light emission assembly to emit an emission light signal to the target object, wherein the mainboard is further electrically connected to the light receiving assembly and configured to control the light receiving assembly to receive the echo light signal reflected by the target object; and
an electronic control board, disposed independently of the mainboard and electrically connected to the mainboard, wherein the electronic control board is further electrically connected to the light scanning assembly to control a movement of the light scanning assembly.

9. The opto-mechanical system according to any one of claims 1 to 8, further comprising:

a housing forming a first accommodating cavity, wherein the light emission assembly, the light receiving assembly and the light scanning assembly are all located in the first accommodating cavity, and the housing comprises a first board;
a mainboard, located in the first accommodating cavity, electrically connected to the light emission assembly and configured to control the light emission assembly to emit an emission light signal to the target object, wherein the mainboard is further electrically connected to the light receiving assembly and configured to control the light receiving assembly to receive the echo light signal reflected by the target object; and
a separating member, located in the first accommodating cavity and spaced apart from the first board, wherein the mainboard is disposed between the first board and the separating member, and the first board and the separating member are metal parts.

10. The opto-mechanical system according to any one of claims 1 to 9, further comprising a separating member forming an emission light channel (71) and an echo light channel (72), wherein the emission light channel has a first light inlet (711) and a first light outlet (712), the echo light channel has a second light inlet (721) and a second light outlet (722), the light emission assembly is disposed to correspond to the first light inlet, the first light scanning element is disposed to correspond to the first light outlet, the first light scanning element is further disposed to correspond to the second light inlet, and the light receiving assembly is disposed to correspond to the second light outlet.

**Patentansprüche**

1. Optomechanisches System (1), umfassend:

   eine Lichtemissionsbaugruppe (10), konfiguriert, um ein Emissionslichtsignal zu einem Zielobjekt auszusenden;
   eine Lichtempfangsbaugruppe (20), konfiguriert, um ein vom Zielobjekt reflektiertes Echolichtsignal zu empfangen;
   **dadurch gekennzeichnet, dass** das System weiterhin umfasst:

   eine Lichtabtastbaugruppe (30), umfassend ein erstes Lichtabtastelement (31) und ein zweites Lichtabtastelement (32), wobei das von der Lichtemissionsbaugruppe (10) ausgesendete Emissionslichtsignal nacheinander durch das erste Lichtabtastelement (31) und das zweite Lichtabtastelement (32) zum Zielobjekt übertragen wird und das vom Zielobjekt reflektierte Echolichtsignal nacheinander durch das zweite Lichtabtastelement (32) und das erste Lichtabtastelement (31) zur Lichtempfangsbaugruppe (20) übertragen wird, wobei:

   eine der beiden Baugruppen - Lichtemissionsbaugruppe (10) oder Lichtempfangsbaugruppe (20) - auf einer Seite des ersten Lichtabtastelements (31) entlang einer ersten linearen Richtung (m) angeordnet ist, die vom zweiten Lichtabtastelement (32) abgewandt ist, während die andere Baugruppe - Lichtemissionsbaugruppe (10) oder Lichtempfangsbaugruppe (20) auf einer Seite des zweiten Lichtabtastelements (32) entlang der ersten linearen Richtung (m) angeordnet ist, die vom ersten Lichtabtastelement (31) abgewandt ist;
   das zweite Lichtabtastelement (32) einen Rotationsspiegel (321) umfasst, der Rotationsspiegel (321) über mehrere zweite Reflektionsflächen (3211) zur Übertragung des Emissions- und Echolichtsignals verfügt, wobei der Rotationsspiegel (321) um eine zweite Rotationsachse (q) drehbar ist und die mehreren zweiten Reflektionsflächen (3211) um einen Umfang der zweiten Rotationsachse angeordnet sind; und
   eine Austrittsposition des Emissionslichtsignals und eine Eintrittsposition des Echolichtsignals sich in der Mitte des optomechanischen Systems (1) befinden.

2. Optomechanisches System nach Anspruch 1, wobei:

   die Lichtemissionsbaugruppe und die Lichtabtastbaugruppe entlang einer zweiten linearen Richtung (n) verteilt sind und die Lichtemissionsbaugruppe auf einer von dem Zielobjekt abgewandten Seite der Lichtabtastbaugruppe liegt, wobei die zweite lineare Richtung (n) die erste lineare Richtung (m) schneidet; oder
   die Lichtempfangsbaugruppe und die Lichtabtastbaugruppe entlang der zweiten linearen Richtung verteilt sind und die Lichtempfangsbaugruppe auf einer von dem Zielobjekt abgewandten Seite der Lichtabtastbaugruppe liegt, wobei die zweite lineare Richtung die erste lineare Richtung schneidet.

3. Optomechanisches System nach Anspruch 1 oder 2, wobei:

   das optomechanische System weiterhin eine erste Lichtwegänderungsbaugruppe (40) umfasst, wobei entlang eines Übertragungspfads des Emissionslichtsignals die erste Lichtwegänderungsbaugruppe zwischen der Lichtemissionsbaugruppe und dem ersten Lichtabtastelement angeordnet ist und mindestens ein erstes Reflexionselement umfasst; und
   das optomechanische System weiterhin eine zweite Lichtwegänderungsbaugruppe (50) umfasst, wobei entlang eines Übertragungspfads des Echolichtsignals die zweite Lichtwegänderungsbaugruppe zwischen der Lichtempfangsbaugruppe und dem ersten Lichtabtastelement angeordnet ist und mindestens ein zweites Reflexionselement umfasst.

4. Optomechanisches System nach Anspruch 3, wobei entlang der zweiten linearen Richtung ein erstes Reflexionselement zwischen einem zweiten Reflexionselement und dem ersten Lichtabtastelement liegt, das erste Reflexionselement mit einer ersten Lichtdurchtrittsöffnung versehen ist, durch die das Echolichtsignal zum zweiten Reflexionselement gelangen kann, und die zweite lineare Richtung die erste lineare Richtung schneidet.

5. Optomechanisches System nach Anspruch 3, wobei entlang der zweiten linearen Richtung ein zweites Reflexionselement zwischen einem ersten Reflexionselement und dem ersten Lichtabtastelement angeordnet ist, das zweite Reflexionselement mit einer zweiten Lichtdurchtrittsöffnung ausgestattet ist, durch die das Emissionslichtsignal zum ersten Lichtabtastelement gelangen kann, und die zweite lineare Richtung die erste lineare Richtung schneidet.

**6.** Optomechanisches System nach Anspruch 1, wobei:
das erste Lichtabtastelement ein Galvanometer (311) umfasst, das über eine erste Reflektionsfläche zur Übertragung des Emissionslichtsignals und/oder des Echolichtsignals verfügt und um eine erste Rotationsachse (p) drehbar ist.

**7.** Optomechanisches System nach einem der Ansprüche 1 bis 6, weiterhin umfassend ein Gehäuse, das einen ersten Aufnahmeraum bildet, wobei die Lichtemissionsbaugruppe, die Lichtempfangsbaugruppe und die Lichtabtastbaugruppe alle im ersten Aufnahmeraum angeordnet sind und ein Wärmeleitglied zwischen dem Gehäuse und mindestens einer der Lichtemissionsbaugruppe, der Lichtempfangsbaugruppe und die Lichtabtastbaugruppe vorgesehen ist.

**8.** Optomechanisches System nach einem der Ansprüche 1 bis 7, weiterhin umfassend:

eine Hauptplatine, elektrisch mit der Lichtemissionsbaugruppe verbunden und konfiguriert, um die Lichtemissionsbaugruppe zur Aussendung eines Emissionslichtsignals an das Zielobjekt zu steuern, wobei die Hauptplatine weiterhin elektrisch mit der Lichtempfangsbaugruppe verbunden ist und konfiguriert ist, um die Lichtempfangsbaugruppe zum Empfangen des vom Zielobjekt reflektierten Echolichtsignals zu steuern; und
eine elektronische Steuerplatine, unabhängig von der Hauptplatine angeordnet und mit dieser elektrisch verbunden, wobei die elektronische Steuerplatine weiterhin elektrisch mit der Lichtabtastbaugruppe verbunden ist, um eine Bewegung davon zu steuern.

**9.** Optomechanisches System nach einem der Ansprüche 1 bis 8, weiterhin umfassend:

ein Gehäuse, das einen ersten Aufnahmeraum bildet, wobei die Lichtemissionsbaugruppe, die Lichtempfangsbaugruppe und die Lichtabtastbaugruppe alle im ersten Aufnahmeraum angeordnet sind und das Gehäuse eine erste Platte aufweist;
eine Hauptplatine, im ersten Aufnahmeraum angeordnet, elektrisch mit der Lichtemissionsbaugruppe verbunden und konfiguriert, um die Lichtemissionsbaugruppe zur Aussendung eines Emissionslichtsignals an das Zielobjekt zu steuern, wobei die Hauptplatine weiterhin mit der Lichtempfangsbaugruppe verbunden ist und konfiguriert ist, um die Lichtempfangsbaugruppe zum Empfangen des vom Zielobjekt reflektierten Echolichtsignals zu steuern; und
ein Trennelement, im ersten Aufnahmeraum angeordnet und von der ersten Platte beabstandet, wobei die Hauptplatine zwischen der ersten Platte und dem Trennelement angeordnet ist und die erste Platte und das Trennelement metallisch ausgeführt sind.

**10.** Optomechanisches System nach einem der Ansprüche 1 bis 9, weiterhin umfassend ein Trennelement, das einen Emissionslichtkanal (71) und einen Echolichtkanal (72) bildet, wobei der Emissionslichtkanal über einen ersten Lichteinlass (711) und einen ersten Lichtauslass (712) verfügt, der Echolichtkanal über einen zweiten Lichteinlass (721) und einen zweiten Lichtauslass (722), die Lichtemissionsbaugruppe dem ersten Lichteinlass zugeordnet ist, das erste Lichtabtastelement dem ersten Lichtauslass zugeordnet ist, weiterhin dem zweiten Lichteinlass zugeordnet ist und die Lichtempfangsbaugruppe dem zweiten Lichtauslass zugeordnet ist.

## Revendications

**1.** Système opto-mécanique (1), comprenant :

un ensemble d'émission de lumière (10), configuré pour émettre un signal lumineux d'émission vers un objet cible ;
un ensemble de réception de lumière (20), configuré pour recevoir un signal lumineux d'écho réfléchi par l'objet cible ;
**caractérisé en ce que** le système comprend en outre :

un ensemble de balayage de lumière (30), comprenant un premier élément de balayage de lumière (31) et un deuxième élément de balayage de lumière (32), le signal lumineux d'émission émis par l'ensemble d'émission de lumière (10) étant transmis séquentiellement par le premier élément de balayage de lumière (31) et le deuxième élément de balayage de lumière (32) vers l'objet cible, et le signal lumineux d'écho réfléchi par l'objet cible étant transmis séquentiellement par le deuxième élément de balayage de lumière (32) et le premier élément de balayage de lumière (31) vers l'ensemble de réception de lumière (20),

dans lequel:

l'un des ensembles d'émission de lumière (10) et de réception de lumière (20) est situé d'un côté du premier élément de balayage de lumière (31) opposé au deuxième élément de balayage de lumière (32) le long d'une première direction linéaire (m), et l'autre des ensembles d'émission de lumière (10) et de réception de lumière (20) est situé d'un côté du deuxième élément de balayage de lumière (32) opposé au premier élément de balayage de lumière (31) le long de la première direction linéaire (m);
le deuxième élément de balayage de lumière (32) comprend un miroir rotatif (321), le miroir rotatif (321) comporte plusieurs deuxièmes surfaces de réflexion (3211) pour transmettre le signal lumineux d'émission et le signal lumineux d'écho, le miroir rotatif (321) est rotatif autour d'un deuxième axe de rotation (q), et les plusieurs deuxièmes surfaces de réflexion (3211) sont disposées autour d'une périphérie du deuxième axe de rotation ; et
une position de sortie du signal lumineux d'émission et une position d'incidence du signal lumineux d'écho sont situées au milieu du système opto-mécanique (1).

2. Système opto-mécanique selon la revendication 1, dans lequel :

l'ensemble d'émission de lumière et l'ensemble de balayage de lumière sont distribués le long d'une deuxième direction linéaire (n), et l'ensemble d'émission de lumière est situé d'un côté de l'ensemble de balayage de lumière opposé à l'objet cible, et la deuxième direction linéaire (n) intersecte la première direction linéaire (m) ; ou
l'ensemble de réception de lumière et l'ensemble de balayage de lumière sont distribués le long de la deuxième direction linéaire et l'ensemble de réception de lumière est situé d'un côté de l'ensemble de balayage de lumière opposé à l'objet cible, et la deuxième direction linéaire intersecte la première direction linéaire.

3. Système opto-mécanique selon la revendication 1 ou 2, dans lequel :

le système opto-mécanique comprend en outre un premier ensemble de modification de trajet lumineux (40), dans lequel, le long d'un trajet de transmission du signal lumineux d'émission, le premier ensemble de modification de trajet lumineux est disposé entre l'ensemble d'émission de lumière et le premier élément de balayage de lumière, et le premier ensemble de modification de trajet lumineux comprend au moins un premier élément de réflexion ; et
le système opto-mécanique comprend en outre un deuxième ensemble de modification de trajet lumineux (50), dans lequel, le long d'un trajet de transmission du signal lumineux d'écho, le deuxième ensemble de modification de trajet lumineux est disposé entre l'ensemble de réception de lumière et le premier élément de balayage de lumière, et le deuxième ensemble de modification de trajet lumineux comprend au moins un deuxième élément de réflexion.

4. Système opto-mécanique selon la revendication 3, dans lequel, le long de la deuxième direction linéaire, un premier élément de réflexion est situé entre un deuxième élément de réflexion et le premier élément de balayage de lumière, le premier élément de réflexion est pourvu d'une première ouverture de passage de lumière, le signal lumineux d'écho peut traverser la première ouverture de passage de lumière pour atteindre le deuxième élément de réflexion, et la deuxième direction linéaire intersecte la première direction linéaire.

5. Système opto-mécanique selon la revendication 3, dans lequel, le long de la deuxième direction linéaire, un deuxième élément de réflexion est situé entre un premier élément de réflexion et le premier élément de balayage de lumière, le deuxième élément de réflexion est pourvu d'une deuxième ouverture de passage de lumière, le signal lumineux d'émission peut traverser la deuxième ouverture de passage de lumière pour atteindre le premier élément de balayage de lumière, et la deuxième direction linéaire intersecte la première direction linéaire.

6. Système opto-mécanique selon la revendication 1, dans lequel
le premier élément de balayage de lumière comprend un galvanomètre (311), le galvanomètre a une première surface de réflexion pour transmettre le signal lumineux d'émission et/ou le signal lumineux d'écho, et le galvanomètre est rotatif autour d'un premier axe de rotation (p).

7. Système opto-mécanique selon l'une quelconque des revendications 1 à 6, comprenant en outre un boîtier formant une première cavité de logement, dans lequel l'ensemble d'émission de lumière, l'ensemble de réception de lumière et l'ensemble de balayage de lumière sont tous situés dans la première cavité de logement, et un élément de conduction thermique est prévu entre le boîtier et au moins l'un des ensembles d'émission de lumière, de réception de lumière ou de balayage de lumière.

8. Système opto-mécanique selon l'une quelconque des revendications 1 à 7, comprenant en outre :

une carte mère, connectée électriquement à l'ensemble d'émission de lumière et configurée pour commander l'ensemble d'émission de lumière afin d'émettre un signal lumineux d'émission vers l'objet cible, la carte mère étant en outre connectée électriquement à l'ensemble de réception de lumière et configurée pour commander l'ensemble de réception de lumière afin de recevoir le signal lumineux d'écho réfléchi par l'objet cible ; et
une carte de contrôle électronique, disposée indépendamment de la carte mère et connectée électriquement à la carte mère, la carte de contrôle électronique étant en outre connectée électriquement à l'ensemble de balayage de lumière pour commander un mouvement de l'ensemble de balayage de lumière.

9. Système opto-mécanique selon l'une quelconque des revendications 1 à 8, comprenant en outre :

un boîtier formant une première cavité de logement, dans lequel l'ensemble d'émission de lumière, l'ensemble de réception de lumière et l'ensemble de balayage de lumière sont tous situés dans la première cavité de logement, et le boîtier comprend une première plaque ;
une carte mère, située dans la première cavité de logement, connectée électriquement à l'ensemble d'émission de lumière et configurée pour commander l'ensemble d'émission de lumière afin d'émettre un signal lumineux d'émission vers l'objet cible, la carte mère étant en outre connectée électriquement à l'ensemble de réception de lumière et configurée pour commander l'ensemble de réception de lumière afin de recevoir le signal lumineux d'écho réfléchi par l'objet cible ; et
un élément de séparation, situé dans la première cavité de logement et espacé de la première plaque, la carte mère étant disposée entre la première plaque et l'élément de séparation, et la première plaque et l'élément de séparation étant des pièces métalliques.

10. Système opto-mécanique selon l'une quelconque des revendications 1 à 9, comprenant en outre un élément de séparation formant un canal de lumière d'émission (71) et un canal de lumière d'écho (72), dans lequel le canal de lumière d'émission a une première entrée de lumière (711) et une première sortie de lumière (712), le canal de lumière d'écho a une deuxième entrée de lumière (721) et une deuxième sortie de lumière (722), l'ensemble d'émission de lumière est disposé pour correspondre à la première entrée de lumière, le premier élément de balayage de lumière est disposé pour correspondre à la première sortie de lumière, le premier élément de balayage de lumière est en outre disposé pour correspondre à la deuxième entrée de lumière, et l'ensemble de réception de lumière est disposé pour correspondre à la deuxième sortie de lumière.

FIG. 1

FIG. 2

EP 4 270 052 B1

— · — · —  Echo optical signal

— — — —  Emitted optical signal

FIG. 3

— · — · —  Echo optical signal

— — — —  Emitted optical signal

FIG. 4

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110231606 A
- US 2020182975 A1
- CN 114063096 A